# EUROPÄISCHE PATENTSCHRIFT

(11) **EP 1 319 122 B1**
(45) Veröffentlichungstag und Bekanntmachung des Hinweises auf die Patenterteilung: **25.01.2006**
(21) Anmeldenummer: 01985740.8
(22) Anmeldetag: 18.07.2001
(51) Int. Cl.: F02F 3/26

(54) **VERFAHREN ZUR HERSTELLUNG EINER MULDENRANDVERRUNDUNG AN EINEM KOLBEN**
METHOD FOR ROUNDING OFF THE EDGE OF A RECESS ON A PISTON
PROCEDE POUR LA PRODUCTION D'UN ARRONDI DE BORD DE CAVITE SUR UN PISTON

(30) Priorität: 20.09.2000 DE 10046420
(43) Veröffentlichungstag der Anmeldung: 18.06.2003
(73) Patentinhaber: MAHLE GMBH, D-70376 Stuttgart (DE)
(72) Erfinder: MAYER, Albrecht, 72127 Kusterdingen-Mähringen (DE)
(74) Vertreter: Pohle, Reinhard
(86) Internationale Anmeldenummer: PCT/DE2001/002773
(87) Internationale Veröffentlichungsnummer: WO 2002/027174

(56) Entgegenhaltungen:
- DE-A- 2 018 174
- DE-A- 4 326 978

## Beschreibung

Die Erfindung betrifft ein Verfahren zur Herstellung einer Muldenrandverrundung an einem Kolben für direkteinspritzende Dieselmotoren nach dem Oberbegriff des Anspruchs 1.

Derartige Muldenrandverrundungen werden durch eine Drehbearbeitung des Muldenrands beim Ausdrehen der Mulde erzeugt und dienen zur Vermeidung von Spannungskonzentrationen. Ventilaussparungen mit zur Ebene des Kolbenbodens geneigter Grundfläche, die sich mit der Verbrennungsmulde überschneiden, führen zu einer unzureichenden Verrundung des Muldenrands im Bereich der Ventilaussparungen. Als Lösung für das Problem einer unzureichenden Verrundung des Muldenrands ist es schon bekannt, die Muldenrandverrundung als sogenannte S-Schlagverrundung auszuführen, vgl. z. B. in der DE 4326978, Fig. 1 und 2. Diese von der Bearbeitung her einfache Lösung hat den Nachteil, daß durch das zunehmende Schadvolumen die Partikelemissionen ansteigen.

Die Erfindung beschäftigt sich daher mit dem Problem, mit einem gattungsgemäßen Verfahren eine - auch bei relativ zum Kolbenboden schräggestellten Ventilaussparungen - ausreichende Verrundung herzustellen, ohne das Schadvolumen wesentlich zu erhöhen.

Dieses Problem wird gelöst durch das kennzeichnende Merkmal des Anspruchs 1.

Durch die Führung der die Verrundung erzeugenden Schneide des spangebenden Bearbeitungswerkzeugs parallel zur Ebene der Ventilaussparung wird dort eine ausreichende und gleichmäßige Verrundung erzeugt.

Die Erfindung wird im folgenden anhand eines Ausführungsbeispiels näher erläutert. Es zeigt:
- Fig. 1: eine Draufsicht eines Kolbens mit vier Ventilnischen, wobei der Muldenrand nur im Bereich neben den Ventilnischen verrundet ist
- Fig. 2: einen Schnitt entlang Linie F-F aus Fig. 1
- Fig. 3: die Durchführung des erfindungsgemäßen Verfahrens an dem Kolben aus Fig. 1.

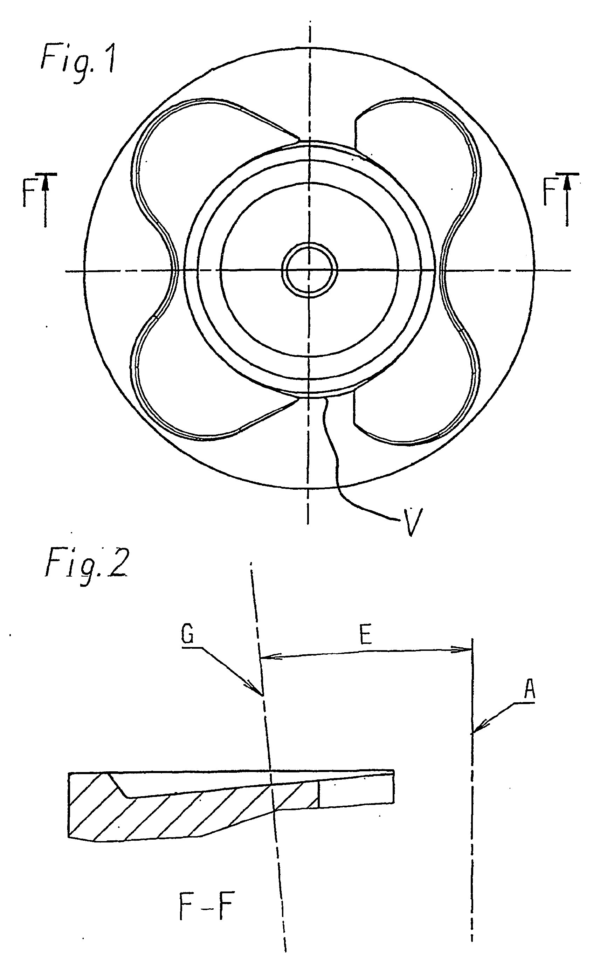

Wie aus Fig. 1 erkennbar liegt zunächst nur eine Verrundung des Muldenrands im Bereich V neben den Ventilaussparungen vor, da die tiefer liegenden, schräg gestellten Ventilaussparungen nicht bzw. nur teilweise von der Drehbearbeitung des Muldenrands erfasst werden.

Es verbleiben daher wie in Fig. 2 erkennbar scharfkantige, nicht verrundete Muldenrandbereiche im Bereich der Ventilaussparungen, die zu Spannungskonzentrationen führen.

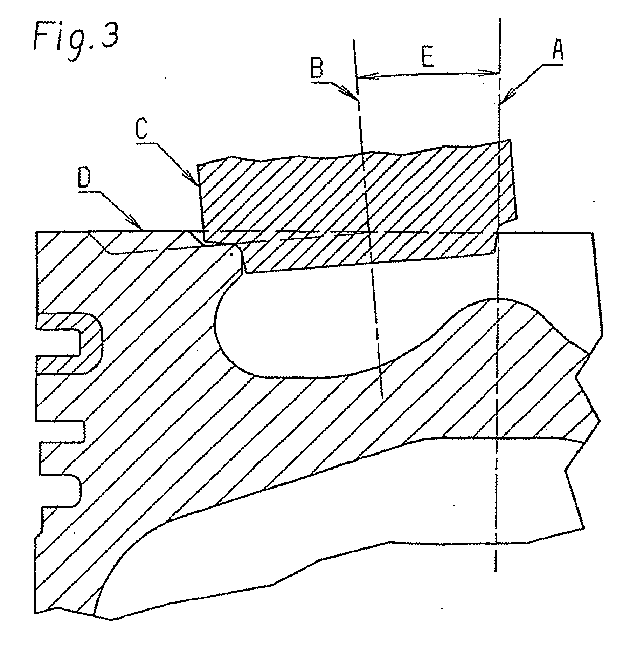

Gemäß Fig. 3 werden diese scharfkantigen Muldenrandbereiche in einem getrennten Arbeitsgang verrundet, unabhängig von der vorhergehenden - oder ggfs. auch nachfolgenden - Bearbeitung der neben den Ventilaussparungen liegenden Muldenrandbereiche.

Dabei wird entweder der Kolben oder das Bearbeitungswerkzeug schräggestellt, sodaß die Achse B des Verrundungs-Werkzeugs C senkrecht oder zumindest annähernd senkrecht zu der die Grundfläche der Ventilaussparung bildenden Ebene steht. Der Winkel zwischen der Kolbenlängsachse A und der Achse B des Bearbeitungswerkzeugs bzw. der Senkrechten zur Ventilnische G ist in den Zeichnungen mit E bezeichnet.

Unabhängig davon, ob der Kolben oder das Werkzeug schräggestellt werden, werden beim Verrunden der radial innen an die Ventilausparungen angrenzenden Muldenrandbereiche die Schneiden des spangebenden Bearbeitungswerkzeugs in einer oder mehreren, zur geneigten Grundfläche der Ventilaussparung parallelen Ebenen geführt.

## Patentansprüche

1. Verfahren zur Herstellung einer Muldenrandverrundung an einem Kolben für direkteinspritzende Dieselmotoren, der Ventilaussparungen aufweist, deren Grundfläche um einen bestimmten Winkel zur Ebene des Kolbenbodens geneigt ist, und wobei die Muldenrandbereiche neben den Ventilaussparungen eine durch eine spangebende Bearbeitung erzeugte Muldenrandverrundung aufweist,
**dadurch gekennzeichnet,**
**daß** im Bereich der Ventilaussparungen eine in einem getrennten Bearbeitungsgang erzeugte, verglichen mit der ersten Muldenrandverrundung tiefer in der Mulde liegende zweite Muldenrandverrundung vorgenommen wird und daß beim Verrunden des Muldenrands im Bereich der Ventilaussparungen die Schneide bzw. die Schneiden des spangebenden Bearbeitungswerkzeugs (C) in einer oder mehreren, zur geneigten Ventilaussparungsgrundfläche zumindest annähernd parallelen Ebene bzw. Ebenen geführt wird bzw. werden.

2. Verfahren nach Anspruch 1,
**dadurch gekennzeichnet,**
**daß** die Muldenrandverrundung der in den Ventilaussparungen liegenden Muldenrandbereiche vor der Muldenrandverrundung der neben den Ventilaussparungen liegenden Muldenrandbereiche vorgenommen wird.

## Claims

1. Method for rounding off the edge of a recess on a piston for direct-injection diesel engines, which comprises valve cutouts, the base surface of which is inclined by a specific angle to the plane of the piston base, and wherein the edge regions of the recess next to the valve cutouts have a rounded recess edge produced by means of a shaving process, **characterised in that** in the region of the valve cutouts a second recess edge rounding is produced in a separate procedure which lies deeper in the recess than the first recess edge rounding, and **in that** on rounding the recess edge in the region of the valve cutouts the cutting edge or the cutting edges of the shaving tool (C) is or are guided in one or more planes that are at least almost parallel to the inclined valve cutout base surface.

2. Method according to claim 1, **characterised in that** the recess edge rounding of the recess edge regions lying in the valve cutouts is carried out before the recess edge rounding of the recess edge regions located next to the valve cutouts.

## Revendications

1. Procédé pour la production d'un arrondi de bord de cavité sur un piston pour moteurs Diesel à injection directe qui présente des évidements pour soupapes dont la surface de fond est incline d'un certain angle par rapport au plan de la tête de piston, et dans lequel les zones de bord de cavité jouxtant les évidements pour soupapes présentent un arrondi de bord de cavité réalisé par usinage avec enlèvement de copeaux,
**caractérisé en ce**
**que** dans la zone des évidements pour soupapes est pratiqué un second arrondi de bord de cavité, réalisé dans une opération d'usinage séparée, situé plus bas dans la cavité par comparaison au premier arrondi de bord de cavité, et que lors de l'arrondissage du bord de cavité dans la zone des évidements pour soupapes l'arête ou les arêtes de l'outil d'usinage avec enlèvement de copeaux (C) est ou sont guidée(s) dans un plan ou plusieurs plans aux moins approximativement parallèles à la surface de fond inclinée de l'évidemment pour soupape.

2. Procédé selon la revendication 1
**caractérisé en ce**
**que** l'arrondi de bord de cavité des zones de bord de cavité situées dans les évidements pour soupapes est réalisé avant l'arrondi de bord de cavité des zones de bord de cavité situées à côté des évidements pour soupapes.
